# EUROPÄISCHE PATENTANMELDUNG

(11) **EP 4 830 881 A1**
(43) Veröffentlichungstag der Anmeldung: **28.10.2026**
(21) Anmeldenummer: 26172151.8
(22) Anmeldetag: 14.04.2026
(51) Int. Cl.: B25J 9/16, G05B 19/423

(54) **VERFAHREN ZUM BETREIBEN EINES MEHRGELENKIGEN ROBOTERARMS**

(30) Priorität: 25.04.2025 DE 102025116119
(71) Anmelder: KUKA Deutschland GmbH, 86165 Augsburg (DE)
(72) Erfinder: SEDLMAYR, Andreas, 82256 Fürstenfeldbruck (DE)
(74) Vertreter: Dorow, Florian

(57) **Zusammenfassung**

Ein Verfahren zum Betreiben eines mehrgelenkigen Roboterarms (10) umfasst: Ermitteln (S10) wenigstens eines ausgewählten kartesischen Freiheitsgrads des Roboterarms und einen Kontaktierbetriebsmodus mit den Schritten: Ermitteln (S11) einer Soll-Last (F_{d}) für wenigstens einen ausgewählten kartesischen Freiheitsgrad des Roboterarms und einer Soll-Posengröße (Δz_{d}) für wenigstens einen anderen kartesischen Freiheitsgrad auf Basis einer Betätigung (Δz) eines Eingabevorrichtungs-Eingabeelements (22); Ermitteln (S14) eines Positionsregelungs-Lastanteils auf Basis der Soll-Posengröße und einer ermittelten Ist-Posengröße für den wenigstens einen anderen kartesischen Freiheitsgrad mittels einer Positionsregelung (120); Ermitteln eines Vorsteuer-Lastanteils zur Kompensierung eines Eigengewichts und/oder einer Gelenkreibung des Roboterarms auf Basis einer ermittelten Ist-Posengröße des Roboterarms (S12) und eines Kraftsteuerungs-Lastanteils auf Basis der ermittelten Soll-Last und des ermittelten Vorsteuer-Lastanteils (S13) mittels einer Kraftsteuerung (110); und Betreiben (S15) von Antrieben (12.1-12.6) des Roboterarms mittels einer Antriebsregelung (121-126) auf Basis des ermittelten Positionsregelungs-Lastanteils und des ermittelten Kraftsteuerungs-Lastanteils, ohne dass Lasten zwischen Gliedern des Roboterarms mittels Gelenklastsensoren erfasst werden. Die Erfindung betrifft außerdem ein System bzw. Computerprogramm(produkt).

## Beschreibung

Die vorliegende Erfindung betrifft ein Verfahren zum Betreiben eines mehrgelenkigen Roboterarms sowie ein System und ein Computerprogramm bzw. Computerprogrammprodukt zur Durchführung des Verfahrens.

Aus betriebsinterner Praxis ist es bekannt, Roboterarme mittels einer Positionsregelung auf Basis vorgegebener Soll-Posengrößen und ermittelter Ist-Posengrößen, beispielsweise einer kartesischen Position eines TCPs, zu betreiben.

Solche (reinen) Positionsregelungen können insbesondere bei einem manuell geführten Kontaktieren einer Umgebung, beispielsweise eines zu bearbeitenden Werkstücks, mit dem Roboterarm, insbesondere einem roboterarmgeführten Werkzeug, zu unerwünscht hohen Kontaktkräften, unerwünschten Schwingungen und dergleichen führen.

Insbesondere daher ist es aus betriebsinterner Praxis auch bekannt, Roboterarme mittels einer Kraftregelung zu betreiben. Dabei werden Lasten mittels Lastsensoren, beispielsweise Lasten zwischen Gliedern des Roboterarms mittels Gelenklastsensoren oder Kontaktlasten an einem Endglied mittels eines Kontaktlastsensors erfasst und basierend hierauf und gewünschten Lasten, beispielsweise Soll-Kontaktkräften, Antriebe des Roboterarms mittels einer Antriebsregelung auf Basis einer entsprechenden Last-Regeldifferenz betrieben.

Solche Kraftregelungen sind aufgrund dieser Lastsensoren aufwändig, insbesondere kostenaufwendig.

Aufgabe der vorliegenden Erfindung ist es, den Betrieb von Roboterarmen zu verbessern, vorzugsweise preisgünstig(er) zu machen.

Diese Aufgabe wird durch ein Verfahren mit den Merkmalen des Anspruchs 1 gelöst. Ansprüche 8, 9 stellen ein System bzw. Computerprogramm bzw. Computerprogrammprodukt zur Durchführung eines hier beschriebenen Verfahrens unter Schutz. Die Unteransprüche betreffen vorteilhafte Weiterbildungen.

Nach einer Ausführung der vorliegenden Erfindung weist ein Verfahren zum Betreiben eines mehrgelenkigen Roboterarms den Schritt auf:
- Ermitteln eines oder mehrerer ausgewählter kartesischer Freiheitsgrade des Roboterarms, in einer Weiterbildung auf Basis einer Benutzereingabe, wobei in einer Ausführung diese Benutzereingabe Teil bzw. ein Schritt eines erfindungsgemäßen Verfahrens ist und/oder mittels einer Bedienerschnittstelle, vorzugsweise an der nachfolgend erläuterten Eingabevorrichtung, eingegeben ist bzw. wird.

Nach einer Ausführung der vorliegenden Erfindung weist das Verfahren einen Kontaktierbetriebsmodus auf, welcher die, vorzugsweise mehrfach, insbesondere zyklisch, wiederholten, Schritte aufweist:
- Ermitteln einer Soll-Last für den bzw. die ausgewählten kartesischen Freiheitsgrade des Roboterarms auf Basis einer Betätigung, vorzugsweise Verstellung, eines, vorzugsweise beweglichen, Eingabeelements einer bzw. der Eingabevorrichtung, vorzugsweise auf Basis einer vorgegebenen Relation und/oder derart, dass eine stärkere Betätigung, insbesondere größere Verstellung, in dem bzw. den entsprechenden Freiheitsgraden einer größeren Soll-Last in diesen Freiheitsgraden entspricht;
- Ermitteln einer Soll-Posengröße für einen oder mehrere andere kartesische Freiheitsgrade des Roboterarms, vorzugsweise für die restlichen bzw. nicht ausgewählten kartesischen Freiheitsgrade des Roboterarms, auf Basis der Betätigung des Eingabeelements, vorzugsweise auf Basis einer vorgegebenen Relation und/oder derart, dass eine stärkere Betätigung, insbesondere größere Verstellung, in dem bzw. den entsprechenden Freiheitsgraden einer größeren Soll-Posenänderung in diesen Freiheitsgraden entspricht; und
- Ermitteln eines Positionsregelungs-Lastanteils auf Basis der ermittelten Soll-Posengröße und einer, in einer Weiterbildung mithilfe eines oder mehrerer Posensensoren, ermittelten Ist-Posengröße für den bzw. die anderen kartesischen Freiheitsgrade mittels einer Positionsregelung.

Das Ermitteln, insbesondere Auswählen, des bzw. der (ausgewählten) kartesischen Freiheitsgrade kann insbesondere vor oder in dem Kontaktierbetriebsmodus oder bei Umschalten in den Kontaktierbetriebsmodus erfolgen, insbesondere kann durch das Auswählen in den Kontaktierbetriebsmodus umgeschaltet werden.

Ein kartesischer Freiheitsgrad des Roboterarms ist in einer Ausführung eine Position einer roboterarmfesten Referenz, beispielsweise eines TCPs, in einer kartesischen Richtung oder eine Drehlage bzw. Orientierung der roboterarmfesten Referenz um eine kartesische Achse im Arbeitsraum des Roboterarms.

Eine Last im Sinne der vorliegenden Erfindung umfasst in einer Ausführung eine ein- oder mehrdimensionale Kraft und/oder ein ein- oder mehrdimensionales Drehmoment, kann insbesondere ein(e) solche(s) sein. Entsprechend ist in einer Ausführung ein Gelenklastsensor ein ein- oder mehrachsiger Drehmomentsensor zur Erfassung eines ein- oder mehrdimensionalen Drehmoments zwischen zwei in einem Gelenk aneinander befestigten Gliedern des Roboters, vorzugsweise wenigstens eines Drehmoments um eine Drehachse des Gelenks, und/oder ein- oder mehrachsiger Kraftsensor zur Erfassung einer ein- oder mehrdimensionalen Kraft zwischen zwei in einem Gelenk aneinander befestigten Gliedern des Roboters, vorzugsweise wenigstens einer Kraft längs einer Schubachse des Gelenks, in einer Ausführung ein Kraft-Momenten-Sensor. Eine Soll-Last kann insbesondere auch gleich Null und/oder ein sogenannter Kraftwinder sein.

Eine Pose im Sinne der vorliegenden Erfindung umfasst in einer Ausführung eine ein- oder mehrdimensionale Position und/oder eine ein- oder mehrdimensionale Orientierung, vorzugsweise einer bzw. der roboterarmfesten Referenz, insbesondere eines TCPs, eine Posengröße in einer Ausführung eine solche ein- oder mehrdimensionale Position und/oder ein- oder mehrdimensionale Orientierung und/oder eine erste und/oder höhere zeitliche Ableitung einer solchen Position und/oder Orientierung, insbesondere also eine translatorische und/oder rotatorische Geschwindigkeit und/oder Beschleunigung.

Eine Regelung auf Basis einer (Regeldifferenz zwischen einer) Soll-Posengröße und einer Ist-Posengröße wird vorliegend verallgemeinernd als Positionsregelung bezeichnet, so dass eine Positionsregelung im Sinne der vorliegenden Erfindung insbesondere auch eine Geschwindigkeitsregelung (Posengröße umfasst zeitliche Ableitung einer Position und/oder Orientierung), einen Differential- und/oder Integralanteil und/oder eine Regelung von Orientierungen bzw. Drehungen umfassen kann.

Nach einer Ausführung der vorliegenden Erfindung weist der Kontaktierbetriebsmodus bzw. das Verfahren in seinen Kontaktierbetriebsmodus die, gegebenenfalls ebenfalls mehrfach bzw. zyklisch wiederholten, Schritte auf:
- Ermitteln eines Vorsteuer-Lastanteils zur Kompensierung eines Eigengewichts und/oder einer Gelenkreibung des Roboterarms auf Basis einer, in einer Weiterbildung mithilfe eines oder mehrerer Posensensoren, ermittelten Ist-Posengröße des Roboterarms;
- Ermitteln eines Kraftsteuerungs-Lastanteils auf Basis der ermittelten Soll-Last und des ermittelten Vorsteuer-Lastanteils mittels einer Kraftsteuerung; und
- Betreiben von Antrieben des Roboterarms mittels einer Antriebsregelung, in einer Weiterbildung eines Stromreglers, auf Basis des ermittelten Positionsregelungs-Lastanteils und des ermittelten Kraftsteuerungs-Lastanteils, ohne dass Lasten zwischen Gliedern des Roboterarms mittels Gelenklastsensoren erfasst werden, vorzugsweise auch ohne dass Kontaktlasten an einem bzw. auf ein Endglied des Roboterarms mittels eines (Kontakt)Lastsensors erfasst werden.

Dem liegt im Gegensatz zu einer Kraft- bzw. hybriden Kraft-Positions-Regelung aller Freiheitsgrade eines Roboterarms oder einer Impedanzregelung bzw. Kraftregelung mit Impedanzverhalten bzw. einem nachgiebigen Freiheitsgrad zu einer Position die neuartige Idee zugrunde, in einem Kontaktierbetriebsmodus einen oder mehrere kartesische Freiheitsgrade auszuwählen und den Roboterarm in diesen sozusagen weich bzw. nachgiebig zu betreiben, wobei er in (den) anderen kartesischen Freiheitsgraden, in einer Weiterbildung (maximal) steif und/oder über eine Kaskadenregelung im Gelenkraum, positionsgeregelt (betrieben) wird und damit vorteilhaft steif(er) den Eingaben über das Eingabeelement folgt, wobei in dem bzw. den ausgewählten Freiheitsgraden das nachgiebige Verhalten des Roboterarms nicht durch einen Abgleich von Ist-Lasten, die mittels Lastsensoren erfasst werden, mit einer Soll-Last für diese(n) Freiheitsgrad(e) realisiert wird, sondern durch eine Laststeuerung, die einen Vorsteuer-Lastanteil zur Kompensierung eines Eigengewichts und/oder einer Gelenkreibung des Roboterarms und einen auf Basis der Soll-Last ermittelten Steuer-Lastanteil umfasst.

Dadurch können vorteilhafterweise für eine Kraftregelung erforderliche Gelenklastsensoren und/oder Kontaktlastsensoren entfallen und dadurch der Betrieb des Roboterarms verbessert, insbesondere der Roboterarm (preis)günstiger betrieben werden. Entsprechend weist der Roboterarm in einer Ausführung keine Gelenklastsensoren zum Erfassen von Lasten zwischen Gliedern des Roboterarms und/oder keine Kontaktlastsensoren zum Erfassen von Kontaktlasten an einem bzw. auf ein Endglied des Roboterarms auf.

Qualitativ lässt sich die Idee in einer Ausführung wie folgt veranschaulichen: wenn beispielsweise der ausgewählte Freiheitsgrad die Gravitationsachse senkrecht zur Roboterarmbasis ist, so wird in dieser durch die Antriebe des Roboters zum einen ein Vorsteuer-Lastanteil zur Kompensierung eines Eigengewichts des Roboterarms aufgeprägt. Betätigt der Benutzer das Eingabeelement entgegen der Gravitationsrichtung, um den Roboterarm in diese Richtung zu führen, so wird einerseits zusätzlich durch den Vorsteuer-Lastanteil eine Gelenkreibung des Roboterarms kompensiert und andererseits entsprechend der Betätigung des Eingabeelements zusätzlich eine Kraft entgegen der Gravitationsrichtung aufgeprägt, so dass bzw. durch die der Roboterarm entgegen der Gravitationsrichtung beschleunigt.

Indem hier nur eine (Vor)Steuerung zur Kompensierung von Eigengewicht und Gelenkreibung und entsprechend der Betätigung des Eingabeelements bzw. der hieraus ermittelten Soll-Last bzw. Soll-Kraft erfolgt, statt Lasten mittels Lastsensoren zu erfassen, mit gewünschten Lasten zu vergleichen und die Antriebe auf Basis dieser Regeldifferenz zu betreiben, kann der Betrieb des Roboterarms verbessert, insbesondere der Roboterarm günstiger betrieben werden. Zugleich kann im Gegensatz zu einer reinen Positionsregelung aller kartesischer Freiheitsgrade ein Kontaktieren einer Umgebung mit dem Roboter verbessert werden: während bei einer reinen Positionsregelung die (durch bereits sehr kurzen anhaltenden Bedienereingaben am Kontakt) wachsende Positionsreglerdifferenz zu immer höheren (integralen) Antriebslasten führt (und diese hohen Antriebslasten bei sofortiger Beendigung der Bedienereingabe anhalten), bleiben durch die Kraftsteuerung mit dem Vorsteuer-Lastanteil zur Kompensierung von Eigengewicht und/oder Gelenkreibung des Roboterarms und des zusätzlichen, auf Basis der Soll-Last ermittelten Anteils des Kraftsteuerungs-Lastanteils die Antriebslasten vorteilhaft begrenzt(er).

In einer Ausführung ist die Eingabevorrichtung an dem Roboterarm, in einer Weiterbildung einem distalen bzw. Endglied des Roboterarms, angeordnet. Zusätzlich oder alternativ weist das Eingabeelement in einer Ausführung wenigstens drei, in einer Weiterbildung vier, fünf oder besonders bevorzugt sechs, Bewegungsfreiheitsgrade auf, kann beispielsweise eine sogenannte Spacemouse oder dergleichen sein.

Für eine entsprechende mehrdimensionale Handführung direkt am Roboterarm ist die vorliegende Erfindung, insbesondere aufgrund der Einsatzrandbedingungen, besonders vorteilhaft, insbesondere unter signalverarbeitungstechnischer Behandlung von Rückkopplungen durch Eigenschwindungen des Arms und Steifigkeit einer gefederten Spacemouse oder dergleichen.

In einer Ausführung weist das Verfahren zusätzlich einen Transferbetriebsmodus auf, in welchem:
- die Soll-Posengröße auf Basis einer Betätigung, vorzugsweise Verstellung, des, vorzugsweise beweglichen, Eingabeelements auch für den bzw. die im Kontaktierbetriebsmodus ausgewählten kartesischen Freiheitsgrade des Roboterarms, vorzugsweise für alle kartesischen Freiheitsgrade des Roboterarms, ermittelt wird;
- eine Positionsregelungs-Last auf Basis der (auf Basis einer Betätigung des Eingabeelements für den bzw. die ausgewählten kartesischen Freiheitsgrade und für den bzw. die anderen der kartesischen Freiheitsgrade des Roboterarms) ermittelten Soll-Posengröße und einer, in einer Weiterbildung mithilfe des bzw. der Posensensoren, ermittelten Ist-Posengröße für (diese) kartesische Freiheitsgrade mittels einer Positionsregelung ermittelt wird; und
- die Antriebe des Roboterarms (in dem Transferbetriebsmodus) mittels der Antriebsregelung auf Basis dieser ermittelten Positionsregelungs-Last betrieben werden.

Indem zusätzlich zu dem Kontaktierbetriebsmodus, in dem der Roboterarm in einem oder mehreren ausgewählten kartesischen Freiheitsgraden weich bzw. nachgiebig (vor)gesteuert wird, ohne dass Lasten mittels Lastsensoren erfasst werden, sondern stattdessen ein Vorsteuer-Lastanteil zur Kompensierung eines Eigengewichts und/oder einer Gelenkreibung des Roboterarms verwendet wird, ein Transferbetriebsmodus zur Verfügung gestellt wird, in dem auch die in dem Kontaktierbetriebsmodus ausgewählten kartesischen Freiheitsgrade mittels einer Positionsregelung positionsgeregelt werden, kann der Roboterarm vorteilhaft, insbesondere rasch(er), präzise(r) und/oder robust(er), an einen Kontaktbereich heran- bzw. von diesem (wieder) weggeführt werden, in dem er sich in dem bzw. den ausgewählten kartesischen Freiheitsgraden weich bzw. nachgiebig verhält. Dadurch kann der Betrieb des Roboterarms (weiter) verbessert werden.

In einer Ausführung weist das Verfahren zusätzlich zu dem Kontaktierbetriebsmodus und gegebenenfalls dem Transferbetriebsmodus einen Bearbeitungsbetriebsmodus auf, in dem der Kraftsteuerungs-Lastanteil statt auf Basis der auf Basis einer Betätigung des Eingabeelements ermittelten Soll-Last auf Basis einer über eine Bedienerschnittstelle, die in einer Weiterbildung an der Eingabevorrichtung angeordnet und dadurch ihre Bedienung verbessert sein kann, vorgegebene Arbeits-Last ermittelt wird.

Dies lässt sich qualitativ wieder an dem vorstehend bereits erläuterten Beispiel veranschaulichen: hat der Bediener ein roboterarmgeführtes Werkzeug oder Werkstück längs der Gravitationsachse, bezüglich der sich der Roboterarm weich bzw. nachgiebig verhält, in Kontakt mit einem umgebungsfesten Werkstück bzw. Werkzeug (hand)geführt, kann er in den Bearbeitungsbetriebsmodus umschalten, in dem statt einer von einer Betätigung des Eingabeelements abhängigen Soll-Last eine über eine Bedienerschnittstelle vorgegebene Soll-Last verwendet wird, so dass dann in dem Bearbeitungsbetriebsmodus der Bediener das Eingabeelement nicht verstellen muss und stattdessen eine Soll-Last präzise(r), in einer Weiterbildung konstant, vorgegeben bzw. realisiert werden kann, beispielsweise, um eine entsprechende Anpresskraft während eines Bearbeitungsprozesses zu realisieren, die insbesondere dazu dienen kann, den Kontakt (automatisch) zu halten und damit eine unebene Oberflächenkontur, einen krummen Kantenverlauf oder dergleichen mit den Positionssensoren des Roboterarms einfach zu erfassen.

In einer Ausführung wird, vorzugsweise auf Basis eines über eine Bedienerschnittstelle, die in einer Weiterbildung an der Eingabevorrichtung angeordnet sein und dadurch ihre Bedienung verbessern kann, eingegebenen Auswahlbefehls von dem Kontaktierbetriebsmodus in den Transferbetriebsmodus und/oder von dem Kontaktierbetriebsmodus in den Bearbeitungsbetriebsmodus und/oder von dem Transferbetriebsmodus in den Kontaktierbetriebsmodus und/oder von dem Bearbeitungsbetriebsmodus in den Kontaktierbetriebsmodus umgeschaltet.

In einer Ausführung ist, in einer Weiterbildung wird, die Ermittlung des Vorsteuer-Lastanteils zur Kompensierung einer Gelenkreibung des Roboterarms mittels Trainieren durch wenigstens einen Bediener maschinell gelernt, insbesondere kann das entsprechende Trainieren bzw. maschinelle Lernen Teil bzw. ein Schritt eines erfindungsgemäßen Verfahrens sein.

Dem liegt die Überlegung zugrunde, dass eine Kompensierung eines Eigengewichts mit kinematischen und Massendaten des Roboterarms bzw. modellgestützt einfach, präzise und zuverlässig realisiert werden kann. Entsprechend basiert in einer Ausführung der bzw. das Ermitteln des Vorsteuer-Lastanteil(s) zur Kompensierung eines Eigengewichts des Roboterarms auf kinematischen und Massendaten und/oder einem numerischen Modell des Roboterarms. Eine Kompensierung einer Gelenkreibung des Roboterarms kann insbesondere eine Kompensierung einer coulombschen und/oder viskosen Reibung, insbesondere einer Losbrechlast und/oder einer Veränderung einer Reiblast zwischen Haften und Gleiten, umfassen. Ein entsprechendes Reibverhalten bzw. dessen Kompensierung kann besonders vorteilhaft, insbesondere einfach(er), präzise(r) und/oder zuverlässig(er), mittels (Trainieren zum) maschinellen Lernen(s) realisiert werden.

Dieses Trainieren kann insbesondere umfassen, dass der Vorsteuer-Lastanteil derart ermittelt, insbesondere adaptiert, wird, dass ohne Betätigung des Eingabeelements bzw. in dessen Nullstellung in dem bzw. den ausgewählten Freiheitsgraden keine Bewegung des Roboterarms in diesen Freiheitsgraden erfolgt bzw. die Antriebe entsprechend betrieben werden, und/oder dass ein Richtungssinn einer Betätigung des Eingabeelements in dem bzw. den ausgewählten Freiheitsgraden und einer daraus resultierenden Bewegung des Roboterarms in diesen Freiheitsgraden gleich ist bzw. die Antriebe entsprechend betrieben werden, und/oder dass eine stärkere Betätigung des Eingabeelements in dem bzw. den ausgewählten Freiheitsgraden eine größere und/oder schnellere Bewegung des Roboterarms in diesen Freiheitsgraden bewirkt bzw. die Antriebe entsprechend betrieben werden.

Zusätzlich oder alternativ kann dieses Trainieren insbesondere umfassen, dass Trainingsdaten für spätere Bedieneinsätze an diesem Roboterarm gespeichert werden und/oder diese personenbezogen bzw. personenspezifisch gehalten werden bzw. dieses Trainieren personenbezogen bzw. personenspezifisch erfolgt, so dass nach unterschiedlichem Bedienerverhalten im Umgang mit Geräten differenziert werden kann. Entsprechend kann die Ermittlung des Vorsteuer-Lastanteils zur Kompensierung einer Gelenkreibung des Roboterarms mittels Trainieren durch wenigstens einen Bediener personenbezogen bzw. personenspezifisch maschinell gelernt sein bzw. werden bzw. personenbezogen bzw. personenspezifisch erfolgen.

Das Trainieren durch den (jeweiligen) Bediener kann insbesondere (sozusagen indirekt) während eines planmäßigen (Arbeits)Einsatzes des Roboterarms oder auch, vorzugsweise unmittelbar, vor einem (Arbeits)Einsatz in einem (vorgeschalteten) Lernverfahren erfolgen, insbesondere Trainingsdaten indirekt bzw. während eines planmäßigen (Arbeits)Einsatzes des Roboterarms oder mit Hilfe von eigenen Teach-Übungen erfasst werden.

Durch die erfindungsgemäße Last(vor)steuerung in dem bzw. den ausgewählten Freiheitsgraden anstelle einer Kraftregelung in diesen Freiheitsgraden (mittels (einer Erfassung von Lasten an bzw. zwischen Gliedern des Roboterarms mittels) Lastsensoren) kann ein Roboterarm, der sich infolge der Soll-Last bereits bewegt, nach Wegfall der Betätigung des Eingabeelements aufgrund der Kompensierung von Eigengewicht und/oder Gelenkreibung weiterbewegen. Dem kann ein Bediener insbesondere durch eine entsprechend gegensinnige Betätigung des Eingabeelements oder Freigeben des Eingabeelements, beispielsweise Betätigungsknopfes, das bzw. der vorzugsweise selbsttätig in die Nullstellung zurückkehrt, entgegenwirken.

In einer Ausführung weist der Vorsteuer-Lastanteil einen Dämpfungsanteil, vorzugsweise Dämpfungsterm, auf, der einer Bewegung des Roboterarms in dem bzw. den ausgewählten kartesischen Freiheitsgraden entgegenwirkt und in einer Weiterbildung von einer Geschwindigkeit und/oder Pose des Roboterarms in diesen Freiheitsgraden abhängt. Somit kann insbesondere auch eine kartesische virtuelle Fesselung an eine Soll-Pose durch einen entsprechenden Dämpfungsanteil realisiert werden, der somit verallgemeinernd nicht nur (geschwindigkeitsabhängige und/oder virtuelle) Dämpferlasten, sondern zusätzlich oder alternativ auch (posenabhängige und/oder virtuelle) Federlasten und insbesondere wenigstens eine virtuelle Wand umfassen bzw. simulieren kann. Hierdurch kann insbesondere die vorgenannte Weiterbewegung des Roboterarms abgebremst werden, so dass der Bediener das Eingabeelement hierzu nicht verstellen muss und die Stabilität des Betriebs verbessert werden kann.

In einer Ausführung wird wenigstens ein( erst)er der Antriebe des Roboterarms auf Basis des ermittelten Kraftsteuerungs-Lastanteils und ein oder mehrere andere (zweite) der Antriebe des Roboterarms, vorzugsweise die restlichen Antriebe des Roboterarms, auf Basis des ermittelten Positionsregelungs-Lastanteils und einer ermittelten Ist-Antriebsgröße des wenigstens einen (ersten) Antriebs betrieben, insbesondere kann dieser wenigstens ein( erst)e der Antriebe als weich bzw. nachgiebig geschaltete Führungsachse dienen, der die anderen Achsen positionsregegelt folgen, wie dies insbesondere in der DE 10 2009 018 403 A1 erläutert ist, auf die ergänzend Bezug genommen und deren Inhalt in die vorliegende Offenbarung einbezogen wird, wobei für die dort genannte nachgiebige Regelung wenigstens einer Führungsachse erfindungsgemäß der Kraftsteuerungs-Lastanteil verwendet wird.

Nach einer Ausführung der vorliegenden Erfindung ist ein System zum Betreiben eines mehrgelenkigen Roboterarms, insbesondere hard- und/oder software-, insbesondere programmtechnisch, zur Durchführung eines hier beschriebenen Verfahrens eingerichtet und/oder weist auf:
- Mittel zum Ermitteln wenigstens eines ausgewählten kartesischen Freiheitsgrads des Roboterarms;
- Mittel zum Ermitteln
   - einer Soll-Last für den wenigstens einen ausgewählten kartesischen Freiheitsgrad des Roboterarms und
   - einer Soll-Posengröße für wenigstens einen anderen kartesischen Freiheitsgrad des Roboterarms
      auf Basis einer Betätigung eines Eingabeelements einer Eingabevorrichtung in einem Kontaktierbetriebsmodus;
- Mittel zum Ermitteln eines Positionsregelungs-Lastanteils
   auf Basis der ermittelten Soll-Posengröße und einer ermittelten Ist-Posengröße für den wenigstens einen anderen kartesischen Freiheitsgrad mittels einer Positionsregelung in dem Kontaktierbetriebsmodus;
- Mittel zum Ermitteln
   - eines Vorsteuer-Lastanteils zur Kompensierung eines Eigengewichts und/oder einer Gelenkreibung des Roboterarms
      auf Basis einer ermittelten Ist-Posengröße des Roboterarms; und
   - eines Kraftsteuerungs-Lastanteils
      auf Basis der ermittelten Soll-Last und des ermittelten Vorsteuer-Lastanteils mittels einer Kraftsteuerung in dem Kontaktierbetriebsmodus; und
- Mittel zum Betreiben von Antrieben des Roboterarms in dem Kontaktierbetriebsmodus mittels einer Antriebsregelung auf Basis des ermittelten Positionsregelungs-Lastanteils und des ermittelten Kraftsteuerungs-Lastanteils, ohne dass Lasten zwischen Gliedern des Roboterarms mittels Gelenklastsensoren erfasst werden, vorzugsweise auch ohne dass Kontaktlasten an einem bzw. auf ein Endglied des Roboterarms mittels eines (Kontakt)Lastsensors erfasst werden.

In einer Ausführung weist das System zusätzlich einen Transferbetriebsmodus auf, in dem
- die Soll-Posengröße auf Basis einer Betätigung des beweglichen Eingabeelements auch für den wenigstens einen ausgewählten kartesischen Freiheitsgrad des Roboterarms ermittelt wird;
- eine Positionsregelungs-Last auf Basis der ermittelten Soll-Posengröße und einer ermittelten Ist-Posengröße für kartesische Freiheitsgrade mittels einer Positionsregelung ermittelt wird; und
- die Antriebe des Roboterarms mittels der Antriebsregelung auf Basis der ermittelten Positionsregelungs-Last betrieben werden.

In einer Ausführung weist das System zusätzlich einen Bearbeitungsbetriebsmodus auf, in dem der Kraftsteuerungs-Lastanteil statt auf Basis der auf Basis einer Betätigung des beweglichen Eingabeelements ermittelten Soll-Last auf Basis einer über eine Bedienerschnittstelle vorgegebene Arbeits-Last ermittelt wird.

In einer Ausführung weist das System eine wenigstens teilweise auf maschinellem Lernen basierende Datenverarbeitung zur Ermittlung des Vorsteuer-Lastanteils zur Kompensierung einer Gelenkreibung des Roboterarms auf, die durch wenigstens einen Bediener trainiert ist bzw. die Ermittlung maschinell gelernt hat bzw. die maschinell gelernte Ermittlung durchführt.

In einer Ausführung weist das System Mittel zum Betreiben wenigstens eines (ersten) der Antriebe des Roboterarms auf Basis des ermittelten Kraftsteuerungs-Lastanteils und wenigstens eines anderen der Antriebe des Roboterarms auf Basis des ermittelten Positionsregelungs-Lastanteils und einer ermittelten Ist-Antriebsgröße des wenigstens einen (ersten) Antriebs auf.

Ein System und/oder Mittel im Sinne der vorliegenden Erfindung kann hard- und/oder softwaretechnisch ausgebildet sein, insbesondere wenigstens eine, vorzugsweise mit einem Speicher- und/oder Bussystem daten- bzw. signalverbundene, insbesondere digitale, Verarbeitungs-, insbesondere Mikroprozessoreinheit (CPU), Graphikkarte (GPU) oder dergleichen, und/oder ein oder mehrere Programme oder Programmmodule, insbesondere einen oder mehrere, vorzugsweise entsprechend programmierte, Computer, aufweisen. Die Verarbeitungseinheit kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die Verarbeitungseinheit die Schritte solcher Verfahren ausführen kann und damit insbesondere den Roboterarm betreiben kann. Ein Computerprogrammprodukt kann in einer Ausführung ein, insbesondere computerlesbares und/oder nicht-flüchtiges, Speichermedium zum Speichern eines Programms bzw. von Anweisungen bzw. mit einem darauf gespeicherten Programm bzw. mit darauf gespeicherten Anweisungen aufweisen, insbesondere sein. In einer Ausführung veranlasst ein Ausführen eines Programms bzw. seiner Anweisungen durch ein System bzw. eine Steuerung, insbesondere einen Computer oder eine Anordnung von mehreren Computern, das System bzw. die Steuerung, insbesondere den bzw. die Computer, dazu, ein hier beschriebenes Verfahren bzw. einen oder mehrere seiner Schritte auszuführen, bzw. sind das Programm bzw. die Anweisungen hierzu eingerichtet.

In einer Ausführung sind ein oder mehrere, insbesondere alle, Schritte des Verfahrens vollständig oder teilweise computerimplementiert bzw. werden ein oder mehrere, insbesondere alle, Schritte des Verfahrens vollständig oder teilweise automatisiert durchgeführt, insbesondere durch das System bzw. sein(e) Mittel.

In einer Ausführung weist das System den Roboterarm und/oder die Eingabevorrichtung und/oder Bedienerschnittstelle auf und/oder die Antriebsregelung eine oder mehrere Antriebsregler, in einer Weiterbildung Stromregler, zum Betreiben der Antriebe.

Weitere Vorteile, Merkmale und vorteilhafte Weiterbildungen der vorliegenden Erfindung ergeben sich aus den Unteransprüchen und den Ausführungsbeispielen. Hierzu zeigt, teilweise schematisiert:
Fig. 1: ein System zum Betreiben eines mehrgelenkigen Roboterarms nach einer Ausführung der vorliegenden Erfindung;
Fig. 2: eine Datenverarbeitung zum Betreiben des Roboterarms; und
Fig. 3: ein Verfahren zum Betreiben des Roboterarms nach einer Ausführung der vorliegenden Erfindung.

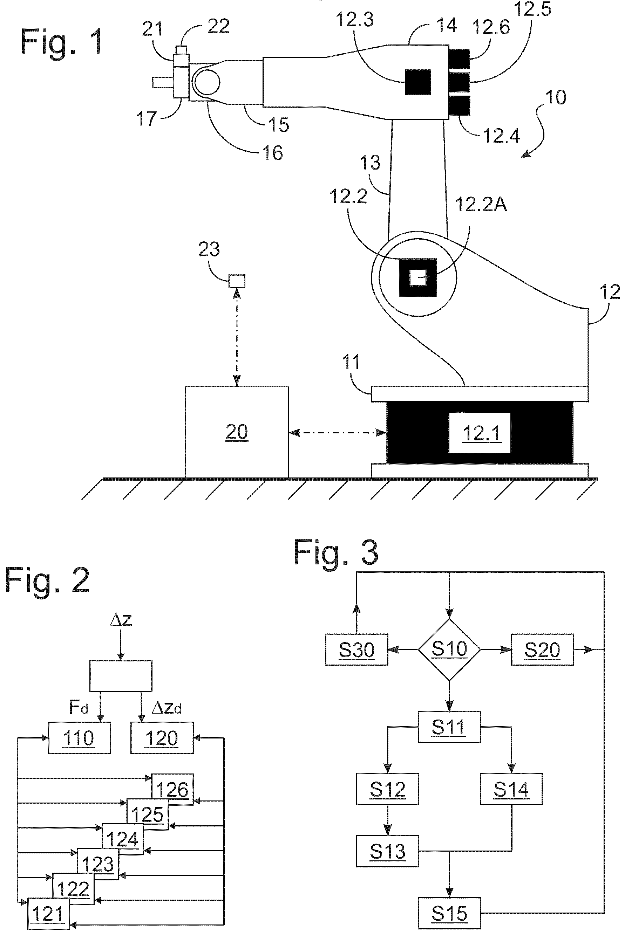

Fig. 1 zeigt ein System zum Betreiben eines mehrgelenkigen Roboterarms 10 mittels einer Steuerung 20, die mit einer Bedienerschnittstelle 23 kommunizieren kann.

An einem Endflansch 17 des Roboterarms 10 ist eine Eingabevorrichtung 21 mit einem beweglichen Eingabeelement 22 angeordnet, beispielsweise eine Spacemouse oder dergleichen.

Mithilfe der Bedienerschnittstelle 23, die auch an der Eingabevorrichtung 21 angeordnet sein kann, wird in einen Kontaktierbetriebsmodus umgeschaltet (Fig. 3: Schritt S10 → Schritt S11) und davor, dabei oder danach wenigstens ein kartesischer Freiheitsgrad ausgewählt, in dem der Roboterarm sich weich bzw. nachgiebig verhalten soll.

Im Kontaktierbetriebsmodus wird auf Basis einer Betätigung Δz des beweglichen Eingabeelements 22 für den wenigstens einen ausgewählten kartesischen Freiheitsgrad des Roboterarms eine Soll-Last F_{d} und für die anderen kartesischen Freiheitsgrade des Roboterarms eine Soll-Posengröße Δz_{d} ermittelt (Fig. 3: Schritt S11), zur einfacheren und anschaulichen Erläuterung beispielsweise eine Soll-Last bzw. Soll-Posenänderung proportional zur Betätigung, wobei auch andere Relationen vorgesehen sein können.

Mittels einer Kraftsteuerung 110 (vgl. Fig. 2) wird in einem Schritt S12 auf Basis einer Ist-Posengröße des Roboterarms 10, die mittels Posensensoren ermittelt werden, ein Vorsteuer-Lastanteil zur Kompensierung eines Eigengewichts und/oder einer Gelenkreibung des Roboterarms 10 ermittelt und in einem Schritt S13 auf Basis der ermittelten Soll-Last F_{d} und dieses ermittelten Vorsteuer-Lastanteils ein Kraftsteuerungs-Lastanteil ermittelt. Zur Illustration ist (lediglich) ein Posensensor 12.2A angedeutet.

Mittels einer Positionsregelung 120 (vgl. Fig. 2) wird in einem Schritt S14 auf Basis der ermittelten Soll-Posengröße Δz_{d} und der ermittelten Ist-Posengröße für die anderen kartesischen Freiheitsgrade ein Positionsregelungs-Lastanteil ermittelt.

In einem Schritt S15 werden Antriebe 12.1, ..., 12.6 des Roboterarms mittels Antriebsreglern 121, ..., 126 auf Basis des ermittelten Positionsregelungs-Lastanteils und des ermittelten Kraftsteuerungs-Lastanteils betrieben. Erfindungsgemäß werden keine Lasten zwischen Gliedern 11-17 des Roboterarms 10 mittels (nicht vorhandener) Gelenklastsensoren erfasst und keine Kontaktlasten an dem Endglied 17 des Roboterarms mittels (nicht vorhandener) (Kontakt)Lastsensoren erfasst.

Anstelle des vorstehend erläuterten Kontaktierbetriebsmodus kann durch Eingabe über die Bedienerschnittstelle 23 auch ein Transferbetriebsmodus (Fig. 3: S20), in dem eine Positionsregelung für alle und damit auch für die im Kontaktierbetriebsmodus ausgewählten kartesischen Freiheitsgrade eingesetzt wird, oder ein Bearbeitungsbetriebsmodus (Fig. 3: S30), in dem die Soll-Last F_{d} statt auf Basis der Betätigung des beweglichen Eingabeelements 22 auf Basis einer über die Bedienerschnittstelle 23 vorgegebenen Arbeits-Last ermittelt wird, ausgewählt werden.

In der vorliegenden Offenbarung impliziert "weist ein X auf" allgemein keine abschließende Aufzählung, sondern ist eine Kurzform von "weist wenigstens ein X auf" und umfasst auch "weist zwei oder mehr X auf" sowie "weist außer X auch Y auf". Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10: Roboterarm
- 11, ..., 17: Roboterarmglied
- 12.1, ..., 12.6: Antrieb
- 12.2A: Posensensor
- 20: Steuerung
- 21: Eingabevorrichtung
- 22: Eingabeelement
- 23: Bedienerschnittstelle
- 110: Kraftsteuerung
- 120: Positionsregelung
- 121, ..., 126: Antriebsregler

- F_{d}: Soll-Last
- Δz_{d}: Soll-Posengröße
- Δz: Betätigung

## Patentansprüche

1. Verfahren zum Betreiben eines mehrgelenkigen Roboterarms (10),
wobei das Verfahren den Schritt:
- Ermitteln (S10) wenigstens eines ausgewählten kartesischen Freiheitsgrads des Roboterarms; und
einen Kontaktierbetriebsmodus mit den Schritten aufweist:
- Ermitteln (S11)
- einer Soll-Last (F_{d}) für den wenigstens einen ausgewählten kartesischen Freiheitsgrad des Roboterarms und
- einer Soll-Posengröße (Δz_{d}) für wenigstens einen anderen kartesischen Freiheitsgrad des Roboterarms
auf Basis einer Betätigung (Δz) eines Eingabeelements (22) einer Eingabevorrichtung (21);
- Ermitteln (S14) eines Positionsregelungs-Lastanteils auf Basis der ermittelten Soll-Posengröße und einer ermittelten Ist-Posengröße für den wenigstens einen anderen kartesischen Freiheitsgrad
mittels einer Positionsregelung (120);
- Ermitteln
- eines Vorsteuer-Lastanteils zur Kompensierung eines Eigengewichts und/oder einer Gelenkreibung des Roboterarms auf Basis einer ermittelten Ist-Posengröße des Roboterarms (S12); und
- eines Kraftsteuerungs-Lastanteils
auf Basis der ermittelten Soll-Last und des ermittelten Vorsteuer-Lastanteils (S13)
mittels einer Kraftsteuerung (110); und
- Betreiben (S15) von Antrieben (12.1-12.6) des Roboterarms mittels einer Antriebsregelung (121-126) auf Basis des ermittelten Positionsregelungs-Lastanteils und des ermittelten Kraftsteuerungs-Lastanteils, ohne dass Lasten zwischen Gliedern des Roboterarms mittels Gelenklastsensoren erfasst werden.

2. Verfahren nach Anspruch 1, **dadurch gekennzeichnet, dass** die Eingabevorrichtung an dem Roboterarm angeordnet ist und/oder das Eingabeelement wenigstens drei Bewegungsfreiheitsgrade aufweist.

3. Verfahren nach einem der vorhergehenden Ansprüche, **dadurch gekennzeichnet, dass** zusätzlich ein Transferbetriebsmodus (S20) vorgesehen ist, in dem
- die Soll-Posengröße auf Basis einer Betätigung des Eingabeelements auch für den wenigstens einen ausgewählten kartesischen Freiheitsgrad des Roboterarms ermittelt wird;
- eine Positionsregelungs-Last auf Basis der ermittelten Soll-Posengröße und einer ermittelten Ist-Posengröße für kartesische Freiheitsgrade mittels einer Positionsregelung ermittelt wird; und
- die Antriebe des Roboterarms mittels der Antriebsregelung auf Basis der ermittelten Positionsregelungs-Last betrieben werden.

4. Verfahren nach einem der vorhergehenden Ansprüche, **dadurch gekennzeichnet, dass** zusätzlich ein Bearbeitungsbetriebsmodus (S30) vorgesehen ist, in dem der Kraftsteuerungs-Lastanteil statt auf Basis der auf Basis einer Betätigung des Eingabeelements ermittelten Soll-Last auf Basis einer über eine Bedienerschnittstelle vorgegebenen Arbeits-Last ermittelt wird.

5. Verfahren nach einem der vorhergehenden Ansprüche, **dadurch gekennzeichnet, dass** die Ermittlung des Vorsteuer-Lastanteils zur Kompensierung einer Gelenkreibung des Roboterarms mittels Trainieren durch wenigstens einen Bediener maschinell gelernt ist.

6. Verfahren nach einem der vorhergehenden Ansprüche, **dadurch gekennzeichnet, dass** der Vorsteuer-Lastanteil einen Dämpfungsanteil aufweist, der einer Bewegung des Roboterarms in dem wenigstens einen ausgewählten kartesischen Freiheitsgrad entgegenwirkt.

7. Verfahren nach einem der vorhergehenden Ansprüche, **dadurch gekennzeichnet, dass** wenigstens einer der Antriebe des Roboterarms auf Basis des ermittelten Kraftsteuerungs-Lastanteils und wenigstens ein anderer der Antriebe des Roboterarms auf Basis des ermittelten Positionsregelungs-Lastanteils und einer ermittelten Ist-Antriebsgröße des wenigstens einen Antriebs betrieben wird.

8. System zum Betreiben eines mehrgelenkigen Roboterarms (10), das zur Durchführung eines Verfahrens nach einem der vorhergehenden Ansprüche eingerichtet ist und/oder aufweist:
- Mittel zum Ermitteln wenigstens eines ausgewählten kartesischen Freiheitsgrads des Roboterarms;
- Mittel zum Ermitteln
- einer Soll-Last (F_{d}) für den wenigstens einen ausgewählten kartesischen Freiheitsgrad des Roboterarms und
- einer Soll-Posengröße (Δz_{d}) für wenigstens einen anderen kartesischen Freiheitsgrad des Roboterarms
auf Basis einer Betätigung (Δz) eines Eingabeelements (22) einer Eingabevorrichtung (21) in einem Kontaktierbetriebsmodus;
- Mittel zum Ermitteln eines Positionsregelungs-Lastanteils auf Basis der ermittelten Soll-Posengröße und einer ermittelten Ist-Posengröße für den wenigstens einen anderen kartesischen Freiheitsgrad
mittels einer Positionsregelung (120) in dem Kontaktierbetriebsmodus;
- Mittel zum Ermitteln
- eines Vorsteuer-Lastanteils zur Kompensierung eines Eigengewichts und/oder einer Gelenkreibung des Roboterarms auf Basis einer ermittelten Ist-Posengröße des Roboterarms; und
- eines Kraftsteuerungs-Lastanteils
auf Basis der ermittelten Soll-Last und des ermittelten Vorsteuer-Lastanteils
mittels einer Kraftsteuerung (110) in dem Kontaktierbetriebsmodus; und
- Mittel zum Betreiben von Antrieben (12.1-12.6) des Roboterarms in dem Kontaktierbetriebsmodus mittels einer Antriebsregelung (121-126) auf Basis des ermittelten Positionsregelungs-Lastanteils und des ermittelten Kraftsteuerungs-Lastanteils, ohne dass Lasten zwischen Gliedern des Roboterarms mittels Gelenklastsensoren erfasst werden.

9. Computerprogramm oder Computerprogrammprodukt, wobei das Computerprogramm oder Computerprogrammprodukt, insbesondere auf einem computerlesbaren und/oder nicht-flüchtigen Speichermedium gespeicherte, Anweisungen enthält, die bei der Ausführung durch einen oder mehrere Computer oder ein System nach Anspruch 8 den oder die Computer oder das System dazu veranlassen, ein Verfahren nach einem der Ansprüche 1 bis 7 durchzuführen.
